# EUROPEAN PATENT APPLICATION

(11) **EP 3 825 727 A1**
(43) Date of publication of application: **26.05.2021**
(21) Application number: 19210376.0
(22) Date of filing: 20.11.2019
(51) Int. Cl.: G01S 13/931, G01S 7/40, G01S 7/41

(54) **METHODS AND SYSTEMS FOR RADAR FAULT DETECTION**

(71) Applicant: Veoneer Sweden AB, 447 83 Vårgårda (SE)
(72) Inventor: Marsch, Sebastian, 97464 Niederwerrn (DE); Rydström, Mats, 447 37 Vårgårda (SE)
(74) Representative: Westpatent AB

(57) **Abstract**

A method for detecting fault in a vehicle radar system (160) comprising a radar transceiver (120) and a control unit (121), the method comprises
obtaining data related to an expected radar detection (130) by the radar transceiver (120), wherein the data comprises a geographical area where the radar transceiver (120) should be located in order to expect the detection,
obtaining one or more radar detections by the vehicle radar system (160) when the vehicle radar transceiver (120) is located in the geographical area,
comparing the one or more radar detections by the vehicle radar system (160) to the expected radar detection (130); and
detecting fault in the vehicle radar system (160) in case no radar detection by the vehicle radar system (160) corresponds to the expected detection (130).

## Description

The present disclosure relates to vehicular radar systems. There are disclosed arrangements and methods for automatically detecting fault in vehicular radar systems.

A radar transceiver is a device arranged for transmission and reception of radar signals in a radar frequency band. Radar transceivers are commonly used in vehicles for monitoring vehicle surroundings. Automatic Cruise Control (ACC) functions, Emergency Braking (EB) functions, Advanced Driver Assistance Systems (ADAS) and Autonomous Drive (AD) are some examples of applications where radar data represents an important source of information on which vehicle control is based.

A well-known type of radar transmission format is the frequency modulated continuous wave (FMCW) format. This type of radar waveform comprises a 'chirp' signal of linearly increasing or decreasing frequency.

A radar system does not require an active counter-part, as in a wireless communication system. Electromagnetic energy is transmitted and passively 'bounces' off electromagnetically reflecting targets. These reflections are then received back at the transceiver, whereupon one or more target detections can be made.

If no reflections are received at the transceiver after radar transmission, it either means that no targets are present, or that the radar system is faulty. For instance, the radar system may have experienced hardware or software errors, or the transceiver antenna may have been blocked by some object, such as wet leaves.

A radar system can be tested in a workshop by using dedicated measurement equipment and test routines, whereby radar system faults can be detected. However, it is a challenge to detect faults in radar systems in-field, i.e., on the road, where no measurement equipment is available.

### SUMMARY

It is an object of the present disclosure to provide methods and radar systems for efficient radar fault detection. This object is obtained by a method for detecting fault in a vehicle radar system comprising a radar transceiver and a control unit. The method comprises
obtaining data related to an expected radar detection by the radar transceiver, wherein the data comprises a geographical area where the radar transceiver should be located in order to expect the detection,
obtaining one or more radar detections by the vehicle radar system when the vehicle radar transceiver is located in the geographical area,
comparing the one or more radar detections by the vehicle radar system to the expected radar detection; and detecting fault in the vehicle radar system in case no radar detection by the vehicle radar system corresponds to the expected detection.

This way vehicles may perform regular and automated radar verification, and thereby detect faults soon after they occur. The method can be performed in field during vehicle operation and does not require dedicated measurement equipment or a controlled laboratory environment.

According to aspects, the method comprises obtaining data comprising an expected radar detection distance. This way the radar system may detect if its detection capability has been reduced for some reasons, which is an advantage.

According to aspects, the method comprises obtaining data comprising an expected radar detection strength. This way the radar system may detect if its detection capability has been reduced for some reasons, which is an advantage. The radar system may also calibrate any target classification routines or functions making use of radar detection strength.

According to aspects, the method comprises obtaining data comprising a radar cross-section (RCS) metric associated with the expected detection. Again, the radar system may calibrate any target classification routines or functions making use of radar detection strength. The radar system may detect a reduction in system gain based on the RCS, by comparing a received radar reflection strength to an expected strength determined based on the RCS data.

According to aspects, the method comprises obtaining data comprising a transponder return modulation pattern. This way the radar system is able to identify the expected target in, e.g., a list of targets, based on the transponder return modulation pattern.

According to aspects, the method comprises obtaining data comprising a geographic location associated with the expected detection. This geographic data may be used to determine an expected range as well as an expected bearing to the expected radar target, which means that more advanced radar systems comprising antenna arrays can be verified. For instance, errors in measured bearing to a target can be detected in this way.

The data related to the expected target detection can be obtained in a number of different ways and from a number of different sources, which is an advantage. For instance, according to some examples obtaining the data related to the expected radar detection is based on a message received from the remote server.

The disclosed methods may also comprise determining if the vehicle radar system is located in vicinity of the geographical area by an on-board positioning system, or by visual cue.

The vehicles disclosed herein are associated with the same advantages as discussed above in connection to the different methods. There are furthermore disclosed herein control units adapted to control some of the operations described herein.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

### BRIEF DESCRIPTION OF THE DRAWINGS

The present disclosure will now be described in more detail with reference to the appended drawings, where
Figure 1 schematically illustrates a vehicle;
Figure 2 shows an example radar fault detection scenario;
Figure 3 shows another example radar fault detection scenario;
Figure 4 is a flow chart illustrating methods;
Figure 5 schematically illustrates a control unit; and
Figure 6 shows an example computer program product.

### DETAILED DESCRIPTION

Aspects of the present disclosure will now be described more fully with reference to the accompanying drawings. The different devices and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

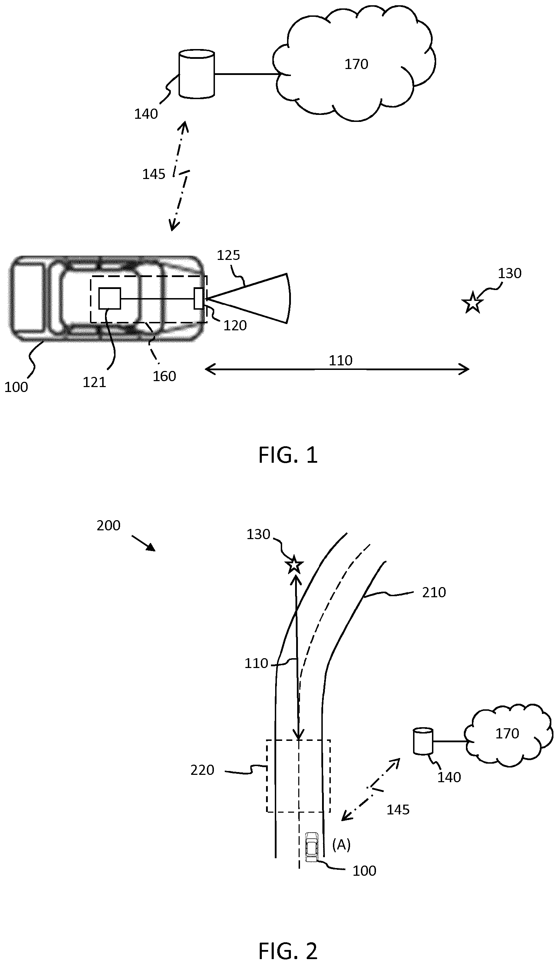

Figure 1 shows a vehicle 100 equipped with a vehicle radar system 160. The radar system comprises a control unit 121 and one or more radar transceivers 120. Each transceiver has one or more antenna ports arranged to be connected to respective antennas. A plurality of antennas are normally referred to as an antenna array. The techniques disclosed herein can be used with single antenna systems as well as in systems comprising one or more antenna arrays.

The control unit 121 and the one or more radar transceivers 120 may be comprised in a single physical unit or they may be distributed over more than one physical unit. Some parts of the radar system functionality may even be comprised in a remote server 140 or cloud-based resource 170 connected to the vehicle 100 via wireless link 145.

According to an example, the vehicle radar system 160 comprises a transceiver arrangement that is arranged for generating and transmitting radar signals in the form of frequency modulated continuous wave (FMCW) signals, sometimes also referred to as radar chirp signals, and to receive reflected radar signals, where the transmitted signals have been reflected by an object 130 at some distance 110.

The present disclosure is not limited to FMCW radar waveforms. Rather, the disclosed concepts and techniques can be applied to many different radar waveforms. In particular, the techniques disclosed herein are applicable to Orthogonal Frequency Division Multiplex (OFDM) radar, and to Pulse Modulated Continuous Wave (PMCW) radar. One example of OFDM radar is the stepped OFDM radar waveform described in EP3323151 A1.

The radar system 160 is associated with a field of view 125. In case the radar transceiver 120 is a front radar, a boresight direction of the radar often coincides with a center line of the field of view 125. In case of a side radar transceiver or a rear corner radar transceiver, the boresight direction may point in some other angle compared to the forward direction of the vehicle 100.

As noted above, the vehicle radar system may be connected via wireless link 145 to a remote server 140, which in turn may be comprised in a cloud-based resource 170 or remote network. This server and network may be configured to assist the vehicle 100 in performing various operations such as radar signal processing, interference mitigation, beamforming, and the like.

It is appreciated that the car shown in Figure 1 is just an example vehicle. The vehicle radar systems disclosed herein may be arranged on any type of vehicle, preferably land-based, such as motorcycles, trucks, busses, trains, trams, bicycles. Furthermore, it is appreciated that the radar transceiver can be arranged on any location on the vehicle and in any orientation, such as in a rearward- or forward-facing position, on top of, under, or on the sides etc.

Most wireless communication systems comprise a first transceiver communicating with a second transceiver. The first transceiver and the second transceiver continuously receives signals and therefore can establish if the own transceiver is faulty or not - no signal probably means something is wrong. In a wireless communication link comprising two transceivers, performance characteristics, such as radiated power, of a transmitter in the first transceiver can be observed through a receiver in the second transceiver. This information can thereafter be transmitted from the second transceiver to the first transceiver. The first transceiver can thereby compensate/adjust for potential performance degradation, due to, e.g., temperature variations or weather conditions. The feedback between the two transceivers can also be used to detect broken or faulty components. To summarize, wireless communication systems comprise an inherent mechanism for detecting serious fault.

Radar systems lack the constant feedback present in wireless communication systems. Detecting fault in a radar system is therefore more challenging since the radar system lacks constant feedback capabilities, as the system only comprises a single transceiver and relies on passive reflections by the environment. In a way, a radar transceiver communicates with itself.

The functionality of a radar system can of course be verified at the factory, in a laboratory, or in a mechanical workshop where test equipment is available to test the radar system. However, when the radar system is deployed and operated in field, there is no way of knowing if the range detection remains correct. For example, an antenna in the radar system might get damaged and radiate less efficiently. Another example are wet leaves getting stuck on the antenna - which also lowers radiation.

Thus, for a radar transceiver - no signal either means there is nothing to detect or that something is wrong.

Modern vehicle radars may use active beamforming for improving detection performance and avoiding strong interference. When using beamforming, calibration of the main lobe is especially important to maintain reliable distance capabilities of the radar system. It is likely that this calibration will deteriorate over time, making frequent functionality testing of the radar system necessary. A radar system which has lost its beamforming calibration is likely to suffer from reduced target detection capability. It may be a challenge to detect when this happens, since some measure of detection capability may remain while targets at long distance are no longer detected according to specification.

The techniques disclosed herein comprise exploiting support from the traffic infrastructure in order to perform radar fault detection on a regular basis in-field. The techniques are based on the radar system obtaining information from the infrastructure, or from on-board memory, related to one or more expected detections that should be made by a functional radar system when the radar system is located in a given geographical area or at some geographical location.

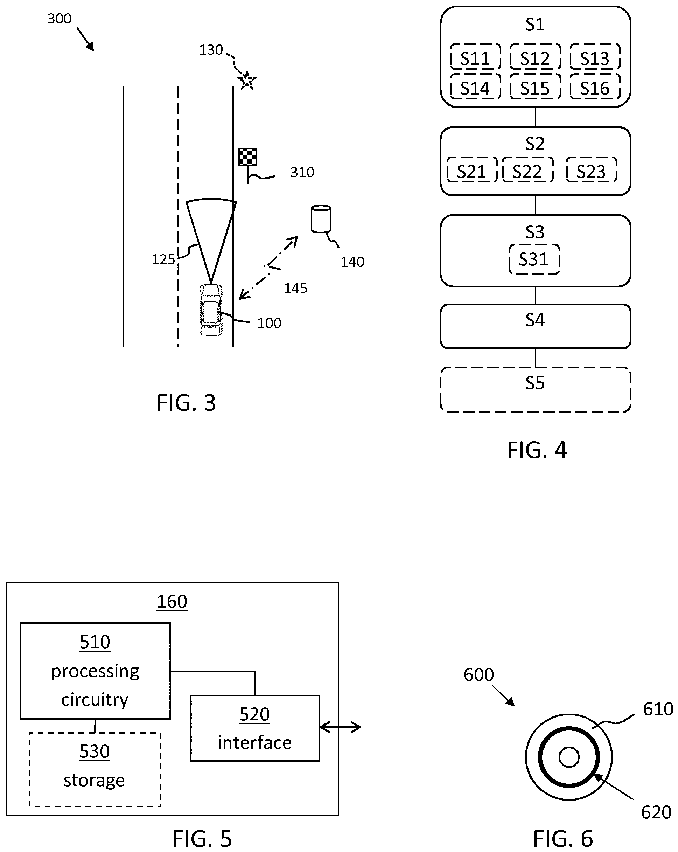

The radar system may then compare its normal detection list to the one or more expected detections when the transceiver is at the correct location. If the detection list is not in agreement with the list of expected detections, then the radar system is likely faulty for some reason. In other words, with reference to Figure 4 and Figure 2, there is disclosed herein a method for detecting fault in a vehicle radar system 160 comprising a radar transceiver 120 and a control unit 121. The method comprises obtaining S1 data related to an expected radar detection 130 by the radar transceiver 120. This data comprises information about a geographical area 220 where the radar transceiver 120 should be located in order to expect the detection.

The radar system is thus informed that it should expect to detect one or more targets (the expected detections') when it is located in some given geographical area.

The data related to the expected radar detection 130 by the vehicle radar system 160 may be based on S16 a message received from the remote server 140, as exemplified in Figure 2. However, the data can also be pre-stored in a memory 530 (shown in Figure 5) on-board the vehicle 100, or it can be obtained by means of vision sensors, as will be discussed below in connection to Figure 3.

The method also comprises obtaining S2 one or more radar detections by the vehicle radar system 160 when the vehicle radar transceiver 120 is located in the geographical area 220. Most vehicle radar systems obtain detections regularly, in cycles, and build a target list or list of detections. Hence, this part of the method is normally performed by most vehicle radar systems anyway. However, in this case, when the vehicle radar transceiver 120 is located in the geographical area 220, the radar system may compare S3 the one or more radar detections by the vehicle radar system 160 to the expected radar detection 130, and detect S4 fault in the vehicle radar system 160 in case no radar detection by the vehicle radar system 160 corresponds to the expected detection 130.

In other words, the vehicle radar system regularly receives data telling it that it should see some targets when it passes some given location or enters some area. If there are no such targets detected, then it can be expected that something is wrong. The radar system may, e.g., then trigger an alarm or issue a warning in the case of radar fault detection S5, to notify the driver that radar capabilities of the vehicle appear to be reduced.

For an autonomous vehicle, this alarm may trigger an emergency maneuver comprising, e.g., maneuvering the vehicle to the side of the road and stopping the vehicle.

The expected radar detection 130 may, e.g., originate from any of a transponder, a radar reflector, and/or from electromagnetically reflective infrastructure. Which type of target that is to be expected may be comprised in the data related to the expected detection.

Figure 2 illustrates one example 200 of the proposed method. The vehicle 100 is here driving along a road 210. At point (A), the vehicle 100 receives data via wireless link 145 from the remote server 170, informing the vehicle that there is a check-point 220 approaching. The check-point 220 is a geographical area where the radar system on the vehicle 100 should be able to detect a stationary target 130 at a given distance 100, such as a range of distances taking the size of the geographical area 220 into account. The data obtained from the remote server 140, or from some cloud-based resource 170, may also comprise data related to the RCS of the target, expected target bearing, and so on. The radar system may then, as it enters the check-point 220, compare its detection list to the obtained data. If it finds a detection corresponding to the target 130 in its detection list, then all is in order and no action is taken. However, if no detection in the detection list corresponds to the target 130, then an alarm may be triggered and/or some maneuver or procedure initialized. If the system is a safety critical system, such as a radar system in an autonomous vehicle, then an emergency brake operation may be performed. However, if the radar system is not safety critical, such as an ACC or the like, then the function can be inactivated, and service of the radar system can be proposed or even directly scheduled.

According to some aspects, an automated calibration procedure can be initiated if determined necessary, for example if it has been determined that one or more radar transceivers 120 is misaligned and/or that the main lobe needs calibration in the case of beamforming. According to some aspects, beamforming parameters can be adapted such that errors due to for example misalignment can be corrected automatically.

The obtained data may comprise a number of different entries or data items, for instance, according to different but compatible aspects, the method comprises obtaining S11 data comprising an expected radar detection distance 110. This detection distance may be given as a single distance value in meters, or as a range of distances. The expected radar detection distance can also be given as a probability distribution over some range of expected distances.

The method may also comprise obtaining S12 data comprising an expected radar detection strength. The data may also comprise expected signal strength. This type of data can be used to check if the radar system provides the expected signal to noise ratio. For instance, an antenna may have been somewhat tilted or dented and thus suffer from reduced performance. If the expected detection is regularly stronger than the corresponding detection by the radar system, then it can be expected that the radar system has suffered from some form of performance degradation, even if the detection is made. The control unit 121 may use this data in order to calibrate received signal strength information related to detected targets. If the expected target is detected at a reduced strength compared to what the data says, then it can be expected that the radar system is operating at reduced gain for some reason, perhaps due to blockage or due to some mechanical damage. This may be logged on-board the vehicle for further investigation next time the vehicle is serviced. An alarm may be triggered if the discrepancy between expected received target power and actual received target power is large.

The method may furthermore comprise obtaining S13 data comprising a radar cross-section, RCS, metric associated with the expected detection 130. The RCS data can be used to calibrate target identification routines and the like. For instance, RCS may be used by some control units to classify targets. A truck is for instance associated with a larger RCS than a motorcycle. If the expected detection is constantly associated with a smaller or a larger RCS value compared to the corresponding detection made by the radar system 160, then an RCS estimation routine of the radar system can be calibrated based on the expected detection data.

The target object 130 which the radar fault detection may rely upon may be a passive target, such as some type of reflective object, or it may be an active target such as a radar transponder. In such cases the data may comprise a transponder return modulation pattern or the like allowing the radar system 160 to identify the target by monitoring the return modulation from the transponder. This simplifies the comparison between the expected detection and the list of target detections maintained by the radar system.

The data may furthermore comprise a geographic location associated with the expected detection. This geographic location may be an absolute location (given, e.g., in a global geodesic coordinate system such as WGS-84), or a relative location, perhaps relative to the geographic area. This form of data allows the radar system 160 to estimate what the expected target strength should be, and at what bearing it should be detected.

This mean that, according to some aspects, the obtained data may comprise information about the stationary target, the information comprising at least one of distance, expected signal strength, height and/or elevation angle, azimuth bearing angle, target identification as well as RCS. In case the stationary target comprises a plurality of sub-targets, the information about the stationary target comprises corresponding data for each sub-target, as well as the number of sub-targets and possibly a sub-target pattern in which the sub-targets are arranged. Using a plurality of sub-targets can provide a more accurate detection of a possible fault in the vehicle radar system 160, for example in the case of beamforming and/or when using a plurality of antenna beams.

The vehicle 100, or the control unit 121, may determine where the vehicle radar system is in relation to the geographical area by a few different methods, which can be used separately or in combination. For instance, the method may comprise determining S21 if the vehicle radar system 160 is located in vicinity of the geographical area 220 by an on-board positioning system. The on-board positioning system may, e.g., comprise a global positioning system (GPS) receiver or the like.

Figure 3 illustrates an application of the proposed techniques where a visual cue 310 has been arranged in sight from the vehicle 100. This visual cue may, e.g., be a signpost comprising a quick response (QR) code or other visual cue which can be detected and interpreted by a vision sensor arranged on the vehicle and communicatively coupled to the control unit 121. The signpost may thus inform the control unit that a geographical area is about to be entered, and the control unit may obtain the data related to the expected radar detection either from the sign post 310, or from establishing a radio link 145 to a remote server 140. This remote server 140 may be co-located with the signpost or visual cue 310. Thus, according to some aspects, the method comprises determining S22 if the vehicle radar system 160 is located in vicinity of the geographical area 220 by visual cue or by means of V2X communication. For example, the vehicle may pass a sign saying "you should see a stationary target at 150m when passing this signpost", the control unit can then compare its target list to see if there is a target at 150m with a relative velocity corresponding to that of the vehicle. If no such target is found, then a radar fault can be suspected. Alternatively, or in combination with the visual cue, a sign may also comprise means for V2X communication, where the V2X communication is adapted to provide information about the stationary target to the vehicle radar system 160. According to some aspects, the stationary target itself is equipped with means for V2X communication, where the V2X communication is adapted to provide information about the stationary target to the vehicle radar system 160.

According to aspects, the method comprises determining S23 if the vehicle radar system 160 is located in vicinity of the geographical area 220 based on a message received from the remote server 140. The remote server 140 may communicate directly with the vehicle to inform the control unit that it is now located in vicinity of a geographical area 220. For instance, the remote server 140 may be co-located with a road-toll camera arranged to detect the presence of the vehicle 100, and to transmit a message comprising the data related to the expected radar detection. The remote server 140 may also be prompted by the vehicle, e.g., after the vehicle passing a sign-post like the visual cue 310 discussed above, to transmit the data to the vehicle related to the expected radar detection.

An exact match between an entry in the target list of the control unit 121 and the expected target detection may not always be found, however, according to some aspects, the method comprises determining S31 a difference between each of the one or more radar detections by the vehicle radar system 160 and the expected radar detection 130. The detecting can then be based on the determined difference - if a sufficiently small difference is found for one or more of the targets in the detection list, then the expected target can be declared as found.

There is also disclosed herein a vehicle radar system 160 comprising a radar transceiver 120 and a control unit 121, wherein the control unit 121 is configured to obtain data related to an expected radar detection 130 by the vehicle radar system 160, wherein the data comprises a geographical area 220 where the radar transceiver 120 should be located in order to expect the detection, the vehicle radar system 160 is further configured to obtain one or more radar detections when the vehicle radar transceiver 120 is located in the geographical area 220 and to compare the one or more radar detections by the vehicle radar system 160 to the expected radar detection 130, wherein the vehicle radar system 160 is arranged to detect fault in the vehicle radar system 160 in case no radar detection by the vehicle radar system 160 corresponds to the expected detection 130.

Figure 5 schematically illustrates, in terms of a number of functional units, the components of the control unit 160 according to an embodiment. Processing circuitry 510 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 530. The processing circuitry 510 may further be provided as at least one application specific integrated circuit (ASIC), or field programmable gate array (FPGA).

Particularly, the processing circuitry 510 is configured to cause the control unit 160 to perform a set of operations, or steps. These operations, or steps, were discussed above in connection to the various radar transceivers and methods. For example, the storage medium 530 may store the set of operations, and the processing circuitry 510 may be configured to retrieve the set of operations from the storage medium 530 to cause the control unit 160 to perform the set of operations. The set of operations may be provided as a set of executable instructions. Thus, the processing circuitry 510 is thereby arranged to execute methods and operations as herein disclosed.

The storage medium 530 may also comprise persistent storage, which, for example, can be any single one or combination of magnetic memory, optical memory, solid state memory or even remotely mounted memory.

The control unit 160 may further comprise a communications interface 520 for communications with at least one other unit. As such, the radar interface 520 may comprise one or more transmitters and receivers, comprising analogue and digital components and a suitable number of ports for wired or wireless communication.

The processing circuitry 510 is adapted to control the general operation of the control unit 160 e.g. by sending data and control signals to the external unit and the storage medium 530, by receiving data and reports from the external unit, and by retrieving data and instructions from the storage medium 530. Other components, as well as the related functionality, of the control unit 160 are omitted in order not to obscure the concepts presented herein.

Figure 6 shows a computer program product 600 comprising computer executable instructions 620 arranged on a computer readable medium 610 to execute any of the methods disclosed herein.

## Claims

1. A method for detecting fault in a vehicle radar system (160) comprising a radar transceiver (120) and a control unit (121), the method comprises
obtaining (S1) data related to an expected radar detection (130) by the radar transceiver (120), wherein the data comprises a geographical area (220) where the radar transceiver (120) should be located in order to expect the detection,
obtaining (S2) one or more radar detections by the vehicle radar system (160) when the vehicle radar transceiver (120) is located in the geographical area (220),
comparing (S3) the one or more radar detections by the vehicle radar system (160) to the expected radar detection (130) ;
detecting (S4) fault in the vehicle radar system (160) in case no radar detection by the vehicle radar system (160) corresponds to the expected detection (130).

2. The method according to claim 1, comprising obtaining (S11) data comprising an expected radar detection distance (110) .

3. The method according to any previous claim, comprising obtaining (S12) data comprising an expected radar detection strength.

4. The method according to any previous claim, comprising obtaining (S13) data comprising a radar cross-section, RCS, metric associated with the expected detection (130).

5. The method according to any previous claim, comprising obtaining (S14) data comprising a transponder return modulation pattern.

6. The method according to any previous claim, comprising obtaining (S15) data comprising a geographic location associated with the expected detection.

7. The method according to any previous claim, wherein obtaining the data related to the expected radar detection (130) by the vehicle radar system (160) is based on (S16) a message received from the remote server (140).

8. The method according to any previous claim, comprising determining (S21) if the vehicle radar system (160) is located in vicinity of the geographical area (220) by an on-board positioning system.

9. The method according to any previous claim, comprising determining (S22) if the vehicle radar system (160) is located in vicinity of the geographical area (220) by visual cue or by means of V2X communication.

10. The method according to any previous claim, comprising determining (S23) if the vehicle radar system (160) is located in vicinity of the geographical area (220) based on a message received from a remote server (140).

11. The method according to any previous claim, wherein the comparing comprises determining (S31) a difference between each of the one or more radar detections by the vehicle radar system (160) and the expected radar detection (130) .

12. The method according to any previous claim, wherein the expected radar detection (130) originates from any of a transponder, a radar reflector, and/or from electromagnetically reflective infrastructure.

13. The method according to any previous claim, comprising issuing a warning in the case of radar fault detection (S5).

14. A vehicle radar system (160) comprising a radar transceiver (120) and a control unit (121), wherein the control unit (121) is configured to obtain data related to an expected radar detection (130) by the vehicle radar system (160), wherein the data comprises a geographical area (220) where the radar transceiver (120) should be located in order to expect the detection, the vehicle radar system (160) is further configured to obtain one or more radar detections) when the vehicle radar transceiver (120) is located in the geographical area (220) and to compare the one or more radar detections by the vehicle radar system (160) to the expected radar detection (130), wherein the vehicle radar system (160) is arranged to detect fault in the vehicle radar system (160) in case no radar detection by the vehicle radar system (160) corresponds to the expected detection (130).

15. A vehicle (100) comprising the vehicle radar system (160) according to claim 14.
